# EUROPEAN PATENT APPLICATION

(11) **EP 1 946 653 A1**
(43) Date of publication of application: **23.07.2008**
(21) Application number: 07380369.4
(22) Date of filing: 20.12.2007
(51) Int. Cl.: A23L 1/064, A23L 1/09, A23L 1/0522, A23L 1/0524, A23L 1/054

(54) **Dietetic jam and corresponding production method and use**

(30) Priority: 05.01.2007 ES 200700033
(71) Applicant: Jumel Alimentaria s.a., 46715 L'Alqueria de la Comtessa Valencia (ES)
(72) Inventor: Gregori Frasquet, Federico, 46701 Gandia (Valencia) (ES); Ruiz-Díaz Arévalos, Gloria, 46011 Valencia (ES)
(74) Representative: Curell Aguilà, Marcelino

(57) **Abstract**

Dietetic jam and corresponding production method and use. Dietetic jam comprising a fruit content equal or greater than 40%, between 20% and 30% of a sweetener-filler from the polyol family, between 0.015% and 0.07% of an intensive sweetener, and between 2% and 10% by weight of soluble fibre. The production method comprises a cooling stage carried out at a pressure below atmospheric pressure. The jam is used advantageously to fill a packaging made from plastic that can be elastically deformed by a manual force and having a cap that has an outlet hole fitted with a check valve.

## Description

### Field of the invention

The invention relates to a dietetic jam, with a fruit content equal or greater than 40% by weight. The aim of the invention is also a method for producing a dietetic jam and a preferable use of a dietetic jam according to the invention.

### State of the art

Dietetic jams are known, wherein the sugar has been wholly or partially replaced, normally with fructose or sorbital syrup (E-420) combined with sodium cyclamate and aspartame.

Moreover, jams are known that are suitable for being supplied in a plastic packaging that can be elastically deformed by a manual force, and having a cap that has an outlet hole fitted with a check valve. These jams have a suitable viscosity, which is within certain determined intervals. This type of jams has been described in Spanish patent application P200500349, published on 1 July 2005 in the name of the same applicant as this application.

However, dietetic jams that are suitable for being supplied in a plastic packaging that can be elastically deformed by a manual force, and having a cap that has an outlet hole fitted with a check valve, are not known. Neither are jams containing fibre known that are suitable for being supplied in this type of packaging.

Generally, jams must fulfil a series of regulation set requirements. So, for example, what in common language is understood to be jam, under Spanish regulations is divided into three large groups: fruit fillings (with a fruit content lower than 40%), jams (with a fruit content between 40% and 60%, and where "extra" jams must have a fruit content greater than 50%), and preserves (with a fruit content greater than 60%). In this specification and claims the term jam is to be understood to mean any preparation having a fruit content equal or greater than 40%, in other words, including what Spanish regulations define as jam and preserve.

Also, in this specification and claims the % indicated will always be by weight and with respect to the total weight of the jam, unless expressly indicated otherwise.

### Disclosure of the invention

The aim of the invention is a dietetic jam containing fibre that is suitable for being supplied in a plastic packaging that can be elastically deformed by a manual force, and having a cap that has an outlet hole fitted with a check valve. This aim is achieved by means of a dietetic jam of the type indicated at the beginning, characterized in that it comprises between 20% and 30% by weight of a sweetener-filler from the polyol family, between 0.015% and 0.07% by weight of an intensive sweetener, and between 2% and 10% by weight of soluble fibre.

In fact, the importance of sugar in the organoleptic properties of jam and the effectiveness of thickeners is known. Therefore, in order to obtain the jam according to this invention, it is necessary to obtain a combination of sweeteners that not only have optimum organoleptic properties, but which also provide suitable rheological properties so that the jams can be supplied in a plastic packaging that can be elastically deformed by a manual force, and having a cap that has an outlet hole fitted with a check valve. In addition, the dietetic jam according to the invention achieves these aims because its formulation includes soluble fibre.

So, the dietetic jam according to the invention, can be applied to a piece of toast, a slice of bread, etc. without the need to use any cutlery, such as a spoon to take the jam out of the container or a knife to spread it over the toast or the like. Therefore, this means that the jam can be used in an easier, simpler way, according to consumers' current needs. It is quick to apply, no utensils are needed to consume it and it is easy to handle. This will make eating the dietetic jam according to the invention more attractive to consumers. This invention also means consumers can be offered a dietetic jam whose quality, flavour and texture are substantially equivalent to traditional jams and, in addition, with a fibre content between 2% and 10% by weight. This requires a fruit content equal or greater than 40% by weight, preferably greater than 50% by weight, and very preferably equal to 55% by weight, because the high fruit content helps to obtain the organoleptic properties of traditional jam.

Preferably the dietetic jam comprises a mixture of pectin - xantana rubber as the thickener, with between 1.4% and 1.6% by weight of said pectin - xantana rubber mixture. The pectin - xantana rubber mixture preferably used in this invention is a thickener supplied by the firm G.C. Hahn & Co., Germany, under the trade name Hamulsion ® LCC.

Advantageously, the dietetic jam comprises between 3% and 5% by weight of soluble fibre.

Preferably the dietetic jam has a sugar content between 37 and 39 Brix degrees.

In order that the jam can be supplied through the outlet hole fitted with the check valve, it is advantageous that it has a specific range of viscosities, in particularly that it has an apparent viscosity at 24°C between 3500 and 7000 centipoises (cp), at 60 r.p.m. 15 min., and between 26,000 and 90,000 centipoises, at 2 r.p.m. 15 min.

From a specific point of view, it is particularly advantageous that, when the fruit used is strawberry, the jam's apparent viscosity at 24°C be between 3500 and 7000 centipoises, at 60 r.p.m. 15 min., and between 31,000 and 90,000 centipoises, at 2 r.p.m. 15 min., and that, when the fruit used is peach, the jam's apparent viscosity at 24°C be between 3500 and 7000 centipoises, at 60 r.p.m. 15 min., and between 26,000 and 70,000 centipoises, at 2 r.p.m. 15 min.

Both in this specification and in the claims, the viscosities have been measured using a digital viscometer sold under the name of Brookfield DVII, Model S, with speed ranges of 0.1 to 200 r.p.m. and 4 feed screws with a temperature sensor probe. The equipment is suitable for measuring the apparent viscosity depending on a specific speed (in r.p.m.) and the type of feed screw used.

Advantageously, the dietetic jam according to the invention is tixotropical when it is subject to a low number of revolutions per minute (at 2 r.p.m.), and pseudoplastic when it is subject to a high number of revolutions per minute (at 60 r.p.m.). In order to achieve this, it is important to take into account the action of the thickeners used, which enable the jam obtained to solidify and, once solidified it can be handled (for example by pumping) and packaged at room temperature without damaging the gel-like structure formed. The advantage of this combination of properties, which was already known for jams containing sugar, is completely new for dietetic jams and/or jams containing fibre.

The method of producing the jam according to the invention can be common to traditional jam production methods. However, advantageously, it includes a different step with respect to the traditional methods, namely the cooling stage. Preferably this stage will be carried out at a pressure below atmospheric pressure. Advantageously, the pressure of the cooling stage is between - 300 mm mercury column and - 750 mm mercury column depression, preferably between - 500 mm and - 700 mm of mercury column depression.

Another object of the invention is a packaged jam that is dietetic and contains fibre, characterized in that it is packaged in a packaging that has a container body, made from plastic that can be elastically deformed by a manual force, and having a cap that has an outlet hole fitted with a check valve. Preferably the jam is a dietetic jam according to the invention, as described above. In other words, a preferable use of a dietetic jam according to the invention is for filling a plastic packaging that can be elastically deformed by manual force, having a cap that has an outlet hole fitted with a check valve. This way users can be offered a packaged dietetic jam that can be proportioned directly onto the piece of toast or the like, without the need to use any cutlery, and which has all the organoleptic properties of a traditional, quality jam.

Preferably the container packaging has a main body, made from PET (polyethylene terephthalate), and a cap, made from polypropylene, that has a silicone valve inside it. The cap + valve unit affords the packaging its checking or anti-dripping effect, in other words, drip-catching ability, because the valve has a small opening which, when the packaging body is pressed and elastically deformed by the user's hand, enables the jam to pass through the valve and the outlet hole. It is not necessary to completely take the lid off the packaging, and the necessary amount to be consumed is proportioned. The jam keeps better because it is not in direct contact with the atmosphere or with other objects (such as, for example, cutlery), and there is less possibility of physical or microbial contamination.

### Detailed description of some embodiments of the invention

Strawberry and peach dietetic jams, without sugar and with added fibres, have been formulated and prepared, and have been packaged in a plastic packaging that is highly impermeable to gases and humidity and has an anti-drip cap.

Generally, the jams have been prepared taking into account the following:
- Pieces of fruit have been included sized so that they can easily pass from the bottle to the outside without blocking the packaging outlet nozzle. In the case of strawberry jam, whole frozen strawberries were used, previously crushed with a grading of 5 mm, whereas with the peach jam, a peach pulp was use with 5 mm grading combined with peach cremogenate.
- Sweetener-fillers (polyols) and intensive sweeteners (aspartame and potassium acesulfame) are used together to obtain the sweet taste. Isomalt (E-953) has been used as a filler sweetener, which is a compound polyol (it is a mixture of glucopyranoside-D-sorbitol and dehydrated glucopyranoside-D-manitol obtained from sugar). A dose of between 22% - 25% (w/w) is used when preparing jam. Potassium acesulfame E-950 is used as the intensive sweetener, which is a synthetic type, and aspartame E-951, which is made by linking two amino acids (phenylalanine and aspartic acid), with one of them being modified by bonding one methanol molecule. A dose of approximately 0.03% for the aspartame and 0.05% for the potassium acesulfame are used to prepare the jam.
- A solidifier is used that is made up of the pectin + Xantana rubber mixture. Once the jam has solidified and cooled, it can be pumped and handled without its structure breaking, in other words, it withstands shearing treatments without syneresis occurring. The solidifier is sold under the brand name Hamulsion ® LCC by the firm G.C. Hahn & Co., in Germany. The dose used in the preparation of the jams is 1.55%.
- The dietetic jam according to the invention was obtained without adding sugars (either sucrose or fructose), and intensive sweeteners and sweetener-fillers (polyols) were used. This way the calorie content is reduced in comparison with jams made with conventional sugars (sucrose), with the calorific value being reduced by 49% in the case of strawberry jam, and 48% in peach jams.
- The dietetic jam according to the invention includes soluble fibre in its composition, which is sold under the brand name NUTRIOSE ®, and which offers the same nutraceutic properties of fibre (low glycemic index, low calorie content, improved and regulated intestinal tract, etc.). This fibre is made up of starch dextrines partially hydrogenated through heating in the presence of a food grade acid. It comes from non-genetically modified corn. The fibre content of these soluble fibres varies between 55% and 85% on the basis of dry material. This fibre has a low calorific value and low glycemic index, and it is also stable at high temperatures and at acidic pH.
- Citric acid and ascorbic acid were used to adjust the acidity. The doses used are between 0.35%-0.50%. The degree of acidity is very important to afford the jam a suitable consistency and to ensure microbiological safety. With a pH value under 3.20, the thickener or solidifier mixture is not fully effective and so the jam has a liquid consistency. With a pH value above 3.60 there is not enough acidity capacity for the thickening molecules to take effect and again a very fluid jam is obtained that will not solidify.

### Example 1: Strawberry dietetic jams with fibre

| | |
|---|---|
| Fruit (strawberry): | 50% |
| Isomalt: | 23% |
| Aspartame: | 0.03% |
| Acesulfame K: | 0.05% |
| LCC thickener: | 1.55% |
| Citric Acid: | 0.27% |
| Ascorbic Acid: | 0.13% |
| Potassium sorbate: | 0.05% |
| Sodium benzoate: | 0.05% |
| Water: | 20.87% |
| Soluble fibre: | 4.0% |

### Example 2: Peach dietetic jam with fibre

| | |
|---|---|
| Fruit (peach): | 50% |
| Isomalt: | 25% |
| Aspartame: | 0.03% |
| Acesulfame K: | 0.05% |
| LCC thickener: | 1.55% |
| Citric Acid: | 0.24% |
| Ascorbic Acid: | 0.11 % |
| Potassium sorbate: | 0.05% |
| Sodium benzoate: | 0.05% |
| Water: | 18.92% |
| Soluble fibre: | 4.0% |

### Preparation process:

All the raw materials are weighed and inspected, and then the fruit is loaded and mixed with sweeteners and thickeners in a cold process, and afterwards the gradual heating (40° C) begins. At this point, the fibre is added and it is mixed and homogenized. The heating is continued up to about 37-39° Brix, and a pasteurising temperature of 95-98° C. Once these parameters are reached, the acidity correctors are added and finally the preservatives. The jam is then cooled immediately in a vacuum cooler with a double jacket through which cold water circulates, and blades are provided on the inside for gentle stirring. The work pressure is - 700 mm depression mercury column. With these negative pressures, the temperature is cooled to 45° C in a period of about 8 minutes, in other words the initial heating temperature of 95° C is lowered to about 45° C in approximately 8 minutes. Then the normal atmospheric pressure is recovered and the jam is cooled to about 25° C, at which temperature it is packaged in its final jars. With this vacuum cooling process the jam's colour, texture and appearance are improved with respect to the conventional cooking-cooling method. The solidified structure is maintained without incorporating oxygen molecules, and so the jam has a shiny texture without any air occluded in its structure. In addition, this process saves time because a conventional cooler would take about 30 minutes to achieve the same temperature reduction.

### Properties of the jams:

The following tables 1 and 2 contain a summary of the % of added ingredients and the values of the physical-chemical results obtained in the two jams

**Table 1. Data on the added ingredients in the formulations**

| Fruit | Initial sugar % | % Added polyols | Total Sugars | % Jam thickener | % Soluble Fibre added |
|---|---|---|---|---|---|
| Strawberry | 9 | 23 | 34 | 1.55 | 4.0 |
| Peach | 11 | 25 | 36 | 1.55 | 4.0 |

**Table 2. Physical-chemical results:**

| | | | | |
|---|---|---|---|---|
| Fruit | pH (25° C) | Brix | % Humidity 105° C 60 min. | Water activity 20° C |
| Strawberry | 3.48 | 39° | 60.37 | 0.951 |
| Peach | 3.60 | 38° | 62.0 | 0.960 |

### Rheological data:

In both the strawberry and the peach jam, a non-Newtonian tixotropical rheological behaviour was observed at low speeds (at a low number of revolutions per minute, r.p.m.), whereas pseudoplastic behaviour was observed at high r.p.m. speeds.

**Table 3. Rheological results of the jams.**

| Speed (r.p.m.) | Type of jam | Minimum Viscosity (cp) | Maximum Viscosity (cp) | Optimum Value (cp) |
|---|---|---|---|---|
| 2 | *Strawberry | 31.000 | 90.000 | 76.000 |
| | **Peach | 26.000 | 70.000 | 49.000 |
| | | | | |
| 60 | *Strawberry | 3500 | 7000 | 6000 |
| | **Peach | 3500 | 7000 | 4000 |

| | | | | |
|---|---|---|---|---|
| * Strawberry: The # 6 feed screw was used at 24° C ** Peach: The # 5 feed screw was used at 24° C | | | | |

## Claims

1. Dietetic jam, with a fruit content equal or greater than 40% by weight, **characterized in that** it comprises between 20% and 30% by weight of a filler sweetener from the family of polyols, between 0.015% and 0.07% by weight of an intensive sweetener, and between 2% and 10% by weight of soluble fibre.

2. Jam according to claim 1, **characterized in that** it has a fruit content equal or greater than 50% by weight, preferably equal to 55% by weight.

3. Jam according to claims 1 or 2, **characterized in that** it comprises a pectin - xantana rubber mixture as a thickener, said jam having between 1.4% and 1.6% by weight of said pectin - xantana rubber mixture.

4. Dietetic jam according to any of the claims 1 through 3, **characterized in that** it comprises between 3% and 5% by weight of soluble fibre.

5. Jam according to any of the claims 1 through 4, **characterized in that** it has a sugar content of between 37 and 39 Brix degrees.

6. Jam according to any of the claims 1 through 5, **characterized in that** it has an apparent viscosity at 24°C between 3500 and 7000 centipoises, at 60 r.p.m. 15 min., and between 26,000 and 90,000 centipoises, at 2 r.p.m. 15 min.

7. Jam according to any of the claims 1 through 6, **characterized in that** it is tixotropical when it is subjected to 2 r.p.m. and pseudoplastic when it is subjected to 60 r.p.m.

8. Jam according to one of the claims 6 or 7, **characterized in that** said fruit is strawberry and it has an apparent viscosity at 24°C between 3500 and 7000 centipoises, at 60 r.p.m. 15 min., and between 31,000 and 90,000 centipoises, at 2 r.p.m. 15 min.

9. Jam according to one of the claims 6 or 7, **characterized in that** said fruit is peach and it has an apparent viscosity at 24°C between 3500 and 7000 centipoises, at 60 r.p.m. 15 min., and between 26,000 and 70,000 centipoises, at 2 r.p.m. 15 min.

10. Jam according to any of the claims 1 through 9, **characterized in that** it is packaged in a packaging that comprises a container body, made from plastic that can be elastically deformed by a manual force, having a cap that has an outlet hole fitted with a check valve.

11. Method for producing a jam according to any of the claims 1 through 10, **characterized in that** it comprises a jam cooling stage, with said cooling stage being carried out at a pressure below atmospheric pressure.

12. Method according to claim 11, **characterized in that** said pressure is between - 300 mm of mercury column and - 750 mm depression mercury column, preferably between- 500 mm and- 700 mm depression mercury column.

13. Use of a jam according to any of the claims 1 through 9, for filling a packaging made from a plastic material that can be elastically deformed by a manual force and having a cap that has an outlet hole fitted with a check valve.
